# EUROPEAN PATENT APPLICATION

(11) **EP 3 561 344 A1**
(43) Date of publication of application: **30.10.2019**
(21) Application number: 18465522.3
(22) Date of filing: 25.04.2018
(51) Int. Cl.: F16K 1/44, F16K 1/46, F02M 26/69, F02M 26/68

(54) **EXHAUST-GAS VALVE FOR AN EXHAUST-GAS CONTROL DEVICE**

(71) Applicant: Continental Automotive GmbH, 30165 Hannover (DE)
(72) Inventor: Ionica, Costinel Alexandru, 220215 Dr. Tr. Severin (RO)

(57) **Abstract**

An exhaust-gas valve (3) for an exhaust-gas control device (2) has a compensation device (21) for compensating tolerances of two valve bodies (14, 15) arranged on a common shaft (16). The compensation device (21) has two rings (22, 23) which are sealed off with respect to one another and has a spring element (28) for preloading the valve bodies (14, 15). In this way, the exhaust-gas valve (3) can furthermore be easily assembled.

## Description

The invention relates to an exhaust-gas valve for an exhaust-gas control device of an internal combustion engine, having a housing, having a first valve body for controlling the flow to a first outlet duct, and having a second valve body for controlling the flow to a second outlet duct, having a common shaft for holding the two valve bodies, having valve seats respectively facing the valve bodies, and having an actuating device for driving the shaft.

Exhaust-gas control devices are commonly used in modern motor vehicles for conducting exhaust gas of the internal combustion engine to a bypass duct, to a catalytic converter, to an exhaust-gas recirculation arrangement or to a turbocharger, and are known from practice. The exhaust-gas valve known from practice has a central inlet duct and two outlet ducts. The outlet ducts are controlled by the valve bodies. The shaft is displaced by an actuating device, and the position of the two valve bodies relative to the valve seats is thus controlled. The arrangement of the valve bodies of the exhaust-gas valve on a common shaft however requires very narrow tolerances, because each of the valves faces a dedicated valve seat.

The invention is based on the problem of further developing an exhaust-gas valve of the type mentioned in the introduction such that it avoids narrow tolerances and is of simple construction.

Said problem is solved according to the invention in that a compensation device for compensating tolerances is arranged between at least one of the valve bodies and the shaft.

By means of this design, the compensation device permits the alignment of one valve body relative to the valve seat while the other valve body is situated in the valve seat. In this way, tolerances between the valve seats and the valve bodies are reliably compensated. Thermal expansions of the shaft are furthermore also compensated. Since, aside from the compensation device, the exhaust-gas valve requires no further components for the two valve bodies, the exhaust-gas valve is of particularly simple construction.

In another advantageous refinement of the invention, the compensation device is of particularly simple construction if the compensation device has an inner ring, which is connected to the shaft, and an outer ring, which is sealed off with respect to the inner ring, and if the rings are movable relative to one another.

In another advantageous refinement of the invention, the connection of the inner ring to the shaft is of particularly simple construction if the inner ring is pressed together with or welded to the shaft.

In another advantageous refinement of the invention, the valve exhibits particularly high reliability against malfunctioning if the rings have stops facing one another. The stops limit the relative movement of the rings with respect to one another.

In another advantageous refinement of the invention, the sealing of the rings with respect to one another is particularly simple if a sealing element is held in one of the rings and has a guide in the other of the rings. The guide furthermore permits the compensation of the tolerances by means of the compensation device.

In another advantageous refinement of the invention, the exhaust-gas control device is of particularly simple construction if the second valve body is sealingly connected to the shaft. The sealing connection may be realized by means of welding, an interference fit or stamping.

The sealing of the valve body that has the compensation device against the valve seat is of particularly simple construction if the valve body that has the compensation device is preloaded by a spring element in the direction of the valve seat.

In another advantageous refinement of the invention, the preload of the valve body against the valve seat is of particularly simple construction if the spring element preloads the two valve bodies relative to one another. The spring element is preferably formed as a compression spring, and pushes the two valve bodies away from one another.

In another advantageous refinement of the invention, tolerances are compensated in a particularly simple manner if the valve bodies are preloaded away from one another and if the spacing of the valve seats is slightly smaller than the spacing of the valve bodies. Furthermore, in this way, a unit composed of valve bodies and spring element exhibits particularly high stability.

In another advantageous refinement of the invention, it is conducive to a simplification of the assembly of the exhaust-gas control device if the shaft has a tube which holds the valve bodies. This design furthermore leads to a simplification of the assembly process, because a preassemblable structural group can be created with the tube and the valve bodies. Furthermore, the structural group composed of valve body and tube can be exchanged.

The invention permits numerous embodiments. To further illustrate its basic principle, one of these embodiments is illustrated in the drawing and will be described below. In the drawing:
- figure 1: schematically shows an exhaust-gas control device of an internal combustion engine with an exhaust-gas valve,
- figure 2: shows components of the exhaust-gas valve from figure 1 in the open state on an enlarged scale and in a sectional illustration,
- figure 3: shows components of the exhaust-gas valve from figure 1 in the closed state on an enlarged scale and in a sectional illustration,
- figure 4: shows a partial region of a compensation device of the exhaust-gas valve on a greatly enlarged scale.

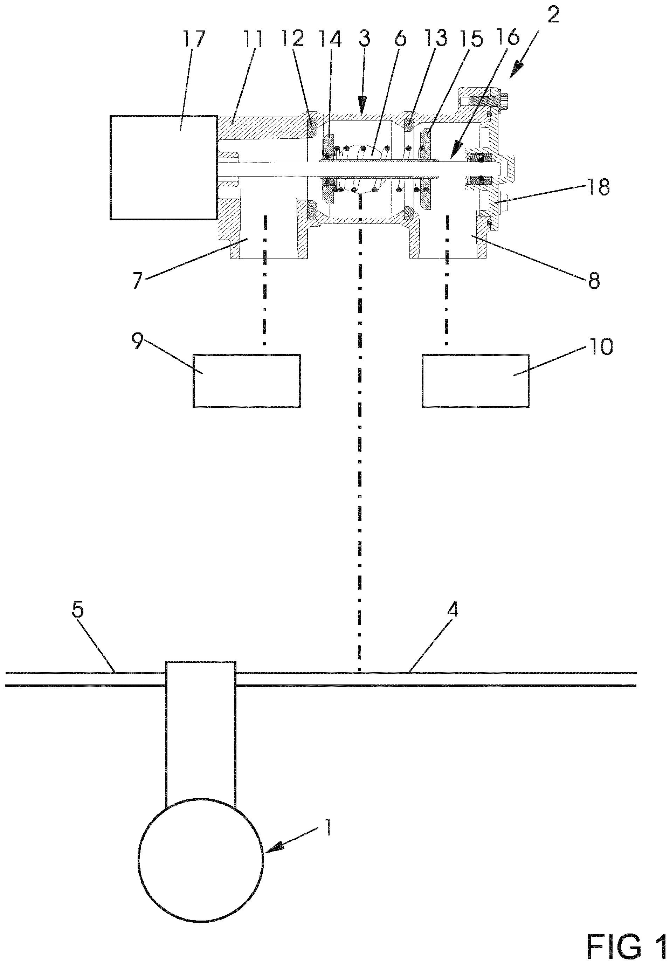

Figure 1 schematically shows an internal combustion engine 1 with an exhaust-gas control device 2 and an exhaust-gas valve 3. The internal combustion engine 1 has an exhaust-gas pipe 4 and an intake duct 5. An inlet duct 6 of the exhaust-gas valve 3 is connected to the exhaust-gas pipe 4. The exhaust-gas valve 3 has two outlet ducts 7, 8, via which partial streams of the exhaust gas of the internal combustion engine 1 are supplied to two schematically illustrated devices 9, 10. The devices 9, 10 may be a turbocharger, a bypass duct, an exhaust-gas recirculation arrangement or the like.

The exhaust-gas valve 3 has a housing 11 with two valve seats 12, 13 fastened therein. Two valve bodies 14, 15 face the valve seats 12, 13. The valve bodies 14, 15 are arranged on a common shaft 16. The shaft 16 can be displaced by an actuating device 17, and the valve bodies 14, 15 can thus be adjusted relative to the valve seats 12, 13. The housing 11 has a housing cover 18. The valve bodies 14, 15 have different cross sections. The valve seat 13 situated closest to the housing cover 18 has a large cross section, such that the valve body 14 remote from the housing cover 18 can be led through during the assembly process.

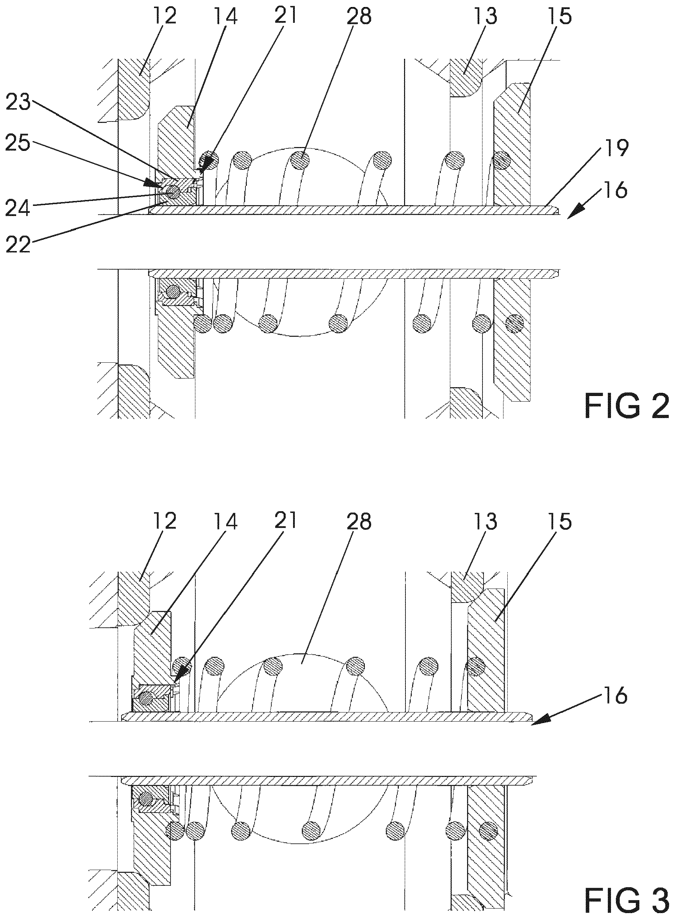

Figure 2 shows, in a sectional illustration, a partial region of the exhaust-gas valve 3 from figure 1 which has the valve seats 12, 13 and the valve bodies 14, 15. It can be seen here that the shaft 16 has a tube 19, which holds the valve bodies 14, 15, and which is connected to the actuating device 17 from figure 1. One of the valve bodies 14 has a compensation device 21 with an inner ring 22, which is pressed onto tube 19, and with an outer ring 23, which is sealingly connected to the valve body 14. The rings 22, 23 are sealed off with respect to one another by an O-ring 24. The O-ring 24 has an axial guide 25 in the outer ring 23. The two valve bodies are preloaded away from one another by a spring element 28 and have a slightly greater spacing to one another than the valve seats 12, 13 have to one another. In the position illustrated in figure 2, the valve bodies 14, 15 are spaced apart from the valve seats 12, 13. This characterizes the open position of the exhaust-gas valve 3.

Figure 3 shows the components of the exhaust-gas valve 3 from figure 2 in a closed position of the exhaust-gas valve 3, after the tube 19 with the valve bodies 14, 15 have been displaced by the actuating device 17. In the position illustrated in figure 3, both valve bodies 14, 15 are bearing against the valve seats 12, 13. Here, the compensation device 21 compensates the tolerances between the components of the exhaust-gas valve 3.

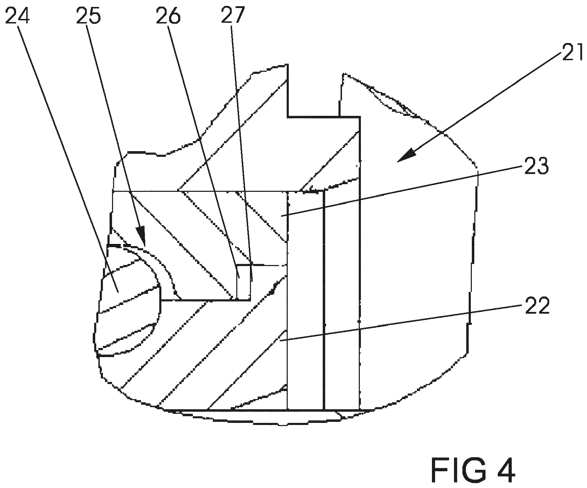

Figure 4 shows a partial region of the compensation device 21 in a central position on a greatly enlarged scale. It can be seen here that the outer ring 23 is displaceable relative to the inner ring 22. The displaceability is limited by means of the guide 25 of the O-ring 24 in the outer ring 23, and two stops 26, 27, facing one another, of the rings 22, 23.

## Claims

1. An exhaust-gas valve (3) for an exhaust-gas control device (2) of an internal combustion engine (1), having a housing (11), having a first valve body (14) for controlling the flow to a first outlet duct (7), and having a second valve body (15) for controlling the flow to a second outlet duct (8), having a common shaft (16) for holding the two valve bodies (14, 15), having valve seats (12, 13), respectively facing the valve bodies (14, 15) and having an actuating device (17) for driving the shaft (16), **characterized in that** a compensation device (21) for compensating tolerances is arranged between at least one of the valve bodies (14) and the shaft (16).

2. The exhaust-gas valve as claimed in claim 1, **characterized in that** the compensation device (21) has an inner ring (22), which is connected to the tube (19), and an outer ring (23), which is sealed off with respect to the inner ring (22), and **in that** the rings (22, 23) are movable relative to one another.

3. The exhaust-gas valve as claimed in claim 2, **characterized in that** the inner ring (22) is pressed together with or welded to the tube (19).

4. The exhaust-gas valve as claimed in claim 2 or 3, **characterized in that** the rings (22, 23) have stops (26, 27) facing one another.

5. The exhaust-gas valve as claimed in at least one of claims 2 to 4, **characterized in that** a sealing element is held in one of the rings (22) and has a guide (25) in the other of the rings (23).

6. The exhaust-gas valve as claimed in at least one of claims 1 to 5, **characterized in that** the second valve body (15) is sealingly connected to the tube (19).

7. The exhaust-gas valve as claimed in at least one of claims 1 to 6, **characterized in that** the valve body (14) that has the compensation device (21) is preloaded by a spring element (28) in the direction of the valve seat (12).

8. The exhaust-gas valve as claimed in claim 7, **characterized in that** the spring element (28) preloads the two valve bodies (14, 15) relative to one another.

9. The exhaust-gas valve as claimed in at least one of claims 1 to 8, **characterized in that** the valve bodies (14, 15) are preloaded away from one another, and **in that** the spacing of the valve seats (12, 13) is slightly smaller than the spacing of the valve bodies (14, 15).

10. The exhaust-gas valve as claimed in at least one of claims 1 to 9, **characterized in that** the shaft (16) is connected to the actuating device (17), and a tube (19) which is fastened to the shaft (16) and which holds the valve bodies (14, 15).
